(19) 

Europäisches
Patentamt
European
Patent Office
Office européen
des brevets

(11) **EP 4 467 427 A1**

(12) **EUROPEAN PATENT APPLICATION**
published in accordance with Art. 153(4) EPC

(43) Date of publication:
**27.11.2024 Bulletin 2024/48**

(21) Application number: **22921366.5**

(22) Date of filing: **19.05.2022**

(51) International Patent Classification (IPC):
**B62D 57/024** (2006.01)     **B25J 11/00** (2006.01)
**B25J 13/08** (2006.01)

(86) International application number:
**PCT/CN2022/093813**

(87) International publication number:
**WO 2023/137935 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2022 CN 202210076525**

(71) Applicant: **Beijing Timeriver Technology Co., Ltd.
Beijing 102402 (CN)**

(72) Inventors:
• **XU, Huayang**
  **Beijing 102402 (CN)**

• **HE, Chengtong**
  **Beijing 102402 (CN)**
• **SONG, Zhangjun**
  **Beijing 102402 (CN)**
• **BIAN, Bingxiang**
  **Beijing 102402 (CN)**
• **WU, Di**
  **Beijing 102402 (CN)**
• **LIU, Yanyu**
  **Beijing 102402 (CN)**
• **GUO, Chaoqiong**
  **Beijing 102402 (CN)**

(74) Representative: **Murgitroyd & Company
165-169 Scotland Street
Glasgow G5 8PL (GB)**

(54) **REVERSIBLE DUST REMOVAL ROBOT**

(57)     A reversible rust removal robot, including a robot main body, a magnetic adsorption apparatus, a rust removal apparatus, a driving wheel group, a high-pressure water pipe (21), a tension sensor (20), a force-magnetic coupling module, a detection apparatus (32), an image recognition system (34), an active-rotation integrated system (33), a control unit, and a magnet swinging apparatus. Without adding a motor, reversal of the robot is realized, various types of falling conditions caused by insufficient tension of the high-pressure water pipe, and an insufficient magnetic adsorption force can be detected and prevented, a falling state is protected, and rust removal quality is detected and adjusted through the detection apparatus (32), the image recognition system (34), and the active-rotation integrated system (33) while normal working of the rust removal robot is ensured, thereby overall ensuring the working safety and the rust removal quality of the rust removal robot.

FIG. 2

EP 4 467 427 A1

## Description

## TECHNICAL FIELD

The present application relates to the technical field of high-altitude working robots, and specifically relates to a reversible rust removal robot.

## BACKGROUND

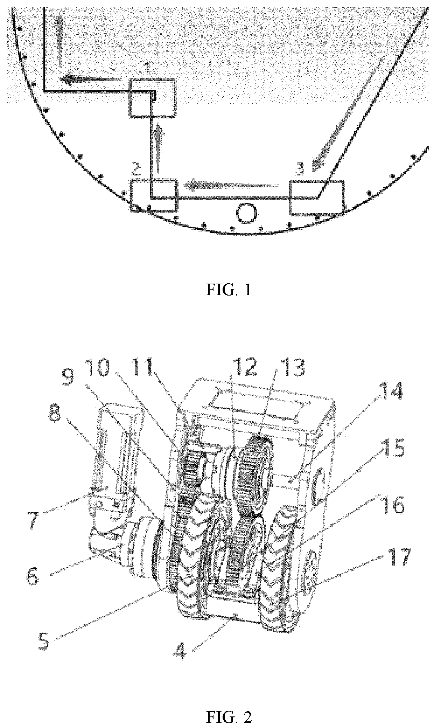

A rust removal robot belongs to a type of high-altitude working robots, and the present high-altitude working robot is based on a lightweight design and usually adopts a sector magnet. A magnet installed on an existing magnetic adsorption robot is fixed to a bottom of the robot, can only move together with the robot, and cannot realize autonomous swinging. Moreover, a chassis of the existing robot may move on large planes and surfaces with small curvatures, but cannot cross adjacent surfaces with an angle which is less than a certain value, such as a position 1, a position 2, a position 3 and similar positions in FIG. 1, that is, the robot can only realize walking on the planes or between the surfaces with smaller angles, and basically cannot realize walking switching between surfaces with large angles. In order to enable the robot to move on surfaces with large curvatures and smoothly cross adjacent surfaces with an angle which is greater than a certain value, it is urgent to improve a magnet swinging mechanism which is commonly used in the existing rust removal robot for high-altitude working.

In addition, falling in the high-altitude working is the most common accident in a high-altitude working process of the rust removal robot, the present rust removal robot is mainly prevented from the falling in a manner of unilaterally increasing an adsorption force, the prevention for the falling is low in scientific property and intelligence degree, and protection measures after the falling are basically not involved, so that a great loss is caused after the falling, and it is urgent to improve an anti-falling mode of the existing rust removal robot. On the other hand, the existing rust removal robot can only complete rust removal working in one direction, and lacks detection and feedback adjustment mechanisms for rust removal quality, so that a poor rust removal effect is caused.

## SUMMARY

In order to solve the above technical problems, the present application provides a reversible rust removal robot. In the solution, on the basis of an existing driving wheel group of the robot, a wheel-group driving motor is taken as power for realizing swinging of a magnet in the case of not adding a motor, transmission for the power is controlled by adding an electromagnetic clutch between the magnet and the driving motor, so that a swinging angle of the magnet is controlled, and when the magnet swings from one surface to another surface, reversal of the robot may be realized, and moreover, the magnet may freely switch between free swinging and active swinging as needed, so that the robot can adapt to the need changes of different curvatures.

The technical solution adopted by the present application is as follows:

a reversible rust removal robot includes:

a robot main body;

a magnetic adsorption apparatus arranged on the robot main body, where a magnet in the magnetic adsorption apparatus is configured to adsorb a working surface;

a rust removal apparatus arranged on the robot main body, and configured to perform rust removal working on an object;

a driving wheel group arranged on the robot main body, including a driving motor, and configured to drive the rust removal robot to walk;

a high-pressure water pipe and a tension sensor, where the high-pressure water pipe is connected to a robot body through the tension sensor, and the tension sensor is configured to detect a tension value on the high-pressure water pipe;

a force-magnetic coupling module arranged on the robot body, and configured to monitor a magnetic adsorption force of the magnet in the magnetic adsorption apparatus and control the magnet in the magnetic adsorption apparatus to carry out linear movement;

a detection apparatus, an image recognition system and an active-rotation integrated system which are arranged on the robot body, where the detection apparatus and the image recognition system are configured to detect a roughness condition of a rust removal surface in real time;

a control unit configured to control the rust removal robot to work, send a falling prevention prompt signal according to the tension value on the high-pressure water pipe, and control the active-rotation integrated system according to the roughness condition; and

a magnet swinging apparatus arranged on the robot main body;

where the magnet swinging apparatus includes the magnet 4 in the magnetic adsorption apparatus, a gear 13, a gear 15, and a magnet fixing seat 16; and the gear 8 is engaged with the gear 15, the magnet is fixed to the gear 15 through the magnet fixing seat, and the gear 15 is driven to swing together with the magnet through rotation of the gear 13.

Further, the tension sensor may detect the tension value on the high-pressure water pipe, the control unit of the rust removal robot may receive the tension value on the high-pressure water pipe, and when the tension value on the high-pressure water pipe is greater than a threshold value of tension, the control unit may control the rust removal robot to stop movement and send the falling prevention prompt signal to a remote controller.

Further, the force-magnetic coupling module may include an execution module, and the magnet in the magnetic adsorption apparatus may be a permanent magnet; and

the execution module may include a motor, a linear fast lead screw, a guide rail, a strain gauge, a transmission bearing, a transmission structure member, a polished shaft, and a shell body, the linear movement of the permanent magnet may be guided through the polished shaft, the shell body may be connected with the polished shaft through a plastic linear bearing, a tail end of the polished shaft may be installed on the transmission structure member, an induced deformation area may be formed on the transmission structure member, the strain gauge may be arranged in the induced deformation area, and the motor and the linear fast lead screw in the execution module may be connected through a synchronous belt.

Further, during normal working, the permanent magnet may generate a magnetic adsorption force on the working surface, a relative movement trend may be generated towards the working surface, the transmission bearing in the shell body of the execution module may make contact with the transmission structure member, the transmission structure member may be deformed, the strain gauge in the induced deformation area may detect a deformation quantity, convert the deformation quantity into an electrical signal, and output the electrical signal to the control unit of the rust removal robot, and the control unit may calculate a value of the magnetic adsorption force during the normal working;

> when a distance between the permanent magnet and the working surface is increased, and the value of the magnetic adsorption force is reduced, the control unit may control the motor in the execution module to rotate, a relative position of the transmission bearing and the transmission structure member may be adjusted, and the permanent magnet may be controlled to move towards the working surface; and when the value of the magnetic adsorption force may reach a threshold value of the magnetic adsorption force, the control unit may control the motor in the execution module to stop movement and maintain at a current position.

Further, the rust removal robot may further include an inertial measurement unit, where the inertial measurement unit may be installed on the robot body, and configured to obtain accelerations, angular speeds, and inclination angles of the robot in three directions of a X axis, a Y axis, and a Z axis in real time;

> the inertial measurement unit may send a real-time acceleration A(Ax, Ay, Az) to the control unit, where Ax represents the acceleration of the rust removal robot in the X-axis direction, Ay represents the acceleration of the rust removal robot in the Y-axis direction, and Az represents the acceleration of the rust removal robot in the Z-axis direction; and when it is determined that A is greater than Amax and A is close to a gravitational acceleration G, Amax is a maximum threshold value of the acceleration of the rust removal robot in a normal working state, the rust removal robot may be determined to be in a falling state, the control unit may send a falling protection signal, and an entire system may receive the falling protection signal and automatically shut down a high-pressure water machine.

Further, the detection apparatus may be configured to detect a roughness value of the rust removal surface in real time, the control unit may receive the roughness value, and when the roughness value is greater than a threshold value of roughness, the control unit may control the active-rotation integrated system to increase a rotation speed until the roughness value of the rust removal surface reaches the threshold value of roughness; and

when the detection apparatus may send a detection fault, the image recognition system may be started to obtain an image of the rust removal surface, the control unit may receive the image of the rust removal surface and recognize rust removal quality of the rust removal surface, and when the rust removal quality does not meet a preset quality condition, the control unit may control the active-rotation integrated system to increase the rotation speed until the rust removal quality of the rust removal surface reaches the preset quality condition.

Further, the magnet swinging apparatus may further include a gear 8, a gear 9, a gear 10, a stop block 11, an electromagnetic clutch 12, a rotary shaft 14, the driving motor 7 in the driving wheel group, a speed reducer 6, a rubber-coated wheel 5, and a rubber-coated wheel 17;

> the gear 8 may be fixed to the rubber-coated wheel 5 and rotate simultaneously with the rubber-coated wheel, and direction change may be realized by adding the gear 9 in a transmission mechanism, so that a swinging direction of the magnet is consistent with a movement direction of the robot; the gear 10 and the gear 13 may be coaxial, the gear 10 may be fixed to the rotary shaft, and free rotation of the gear 13 may be realized by adding a bearing between the gear 13 and the rotary shaft; and connection-disconnection of power transmission may be realized by arranging the electromagnetic clutch between the gear 10 and the gear 13, so that active rotation or free rotation of the gear 13 is controlled.

The gear 13 may be engaged with the gear 15, the magnet may be fixed to the gear 15 through the magnet fixing seat, and the gear 15 may be driven to swing together with the magnet through rotation of the gear 13.

Further, the transmission mechanism may be divided into two parts, a gear 8, a gear 9, and a gear 10 may be a first part, with tooth numbers which are z1, z2, and z3 respectively, the gear 13 and the gear 15 may be a second part, with tooth numbers which are z4 and z5 respectively; where the gear 9 may be an idler gear, and only play a role of direction change, without changing a transmission ratio; and the gear 13 and the gear 15 may have the same modulus.

Further, the gear 9 may be an intermediate idler gear.

Further, the gear 15 may be a sector gear.

Further, a torque value required for swinging the magnet may be calculated according to a value of the magnetic adsorption force of the magnet, and type selection for the electromagnetic clutch may be determined according to the transmitted torque.

Further, during swinging, a forward-backward swinging angle of the magnet may be not less than 90 degrees.

Further, a tooth number of the gear 15 may be calculated according to the forward-backward swinging angle of the magnet.

Further, the calculating according to the forward-backward swinging angle of the magnet may include:

determining a tooth number of a sector part needing to be retained according to the tooth number of the gear 15 and a value of an internal angle that the robot needs to cross, where the internal angle is $\theta$, and an angle of the swinging gear is $\alpha$.
the angle of the swinging gear meets $\alpha > 2(180° - \theta)$; and
the tooth number of the sector part needing to be retained of the swinging gear 15 of the magnet is determined according to the angle $\alpha$ of the swinging gear.

Further, the determining type selection for the electromagnetic clutch according to the transmitted torque may include:
the transmitted torque of the gear 10 may be

$$T_2 = \frac{s_1 * T_m}{i_2}$$

, during type selection for the electromagnetic clutch, the maximum torque of the electromagnetic clutch may be greater than $s_2 * T_2$, and a jaw-type electromagnetic clutch with a high torque-to-weight ratio may be selected.

Further, the calculating the torque value required for swinging the magnet according to the value of the magnetic adsorption force of the magnet may include:

calculating a transmitted torque of the gear 13 according to the torque required for swinging the magnet, where the torque required for swinging the magnet may be $s*T_m$, and the transmitted torque T2 of the gear 13 may be calculated through the following formula:

$$T_2 = \frac{s_1 * T_m}{i_2}$$

where si is a safety factor, $i_2$ is a transmission ratio between the gear 13 and the gear 15, and $T_m$ is the maximum torque required for swinging the magnet; a transmitted torque of the gear 10 may be the same as that of the gear 13, and the transmitted torque of the gear 10 may be calculated in the same manner as that of the gear 13; and
a transmitted torque $T_1$ of the gear 8 may be calculated through the following formula:

$$T_1 = \frac{T_2}{i_1} = \frac{s_1 * T_m}{i_1 i_2}$$

where $i_1$ is a transmission ratio between the gear 8 and the gear 10.

Through the examples of the present application, the following technical effects may be achieved: compared with the related art, according to the present invention, the rust removal robot is enabled to smoothly cross an internal angle and an external angle in FIG. 1, so that the working range of the rust removal robot is greatly expanded, and the adaptability of the rust removal robot is greatly improved. The rust removal robot provided by the present invention can recognize falling dangers caused by external force pulling on the high-pressure water pipe and foreign objects on the working surface, of the robot, and automatically handle the falling dangers, so that falling of the rust removal robot is avoided, and protection measures for a falling state of the rust removal robot are added, so that the working safety is improved; and meanwhile, detection and feedback adjustment mechanisms for rust removal quality are added for the rust removal robot provided by the present invention, so that the rust removal effect is improved.

**BRIEF DESCRIPTION OF THE DRAWINGS**

In order to more clearly explain technical solutions in examples of the present application, drawings needing to be used in the description for the examples or the related art will be briefly introduced below, apparently, the drawings in the description below are some examples of the present application, and for those skilled in the art, other drawings may also be obtained according to these drawings without creative efforts.

FIG. 1 is a schematic diagram of a movement path of a robot in a related art;

FIG. 2 is a schematic diagram of a composition structure of a magnet swinging apparatus;

FIG. 3a and FIG. 3b are schematic diagrams of a composition structure of a transmission mechanism;

FIG. 3c is a schematic diagram of transmission directions of gears in a transmission mechanism;

FIG. 4 is a schematic diagram of software simulation for a torque required for magnetic swinging;

FIG. 5a is a schematic diagram of a state of a magnet before swinging;

FIG. 5b is a schematic diagram of software simulation for a torque required for magnetic swinging;

FIG. 6 is a schematic structure diagram of a high-pressure water pipe and a tension sensor of a rust removal robot;

FIG. 7a is a schematic diagram of a force-magnetic coupling module of a rust removal robot;

FIG. 7b is a schematic diagram of an internal structure of a force-magnetic coupling module of a rust removal robot in the first perspective;

FIG. 7c is a schematic diagram of an internal structure of a force-magnetic coupling module of a rust removal robot in the second perspective;

FIG. 8 shows a pose model of a rust removal robot; and

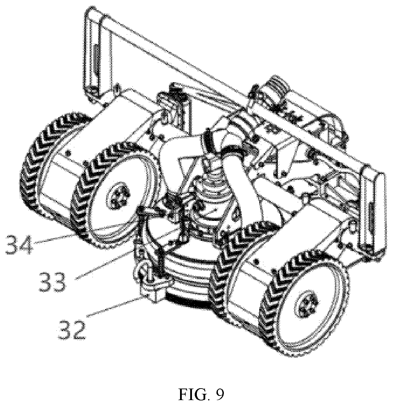

FIG. 9 is a schematic structure diagram of a detection apparatus, an image recognition system and an active-rotation integrated system of a rust removal robot.

## DETAILED DESCRIPTION OF THE EMBODIMENTS

In order to make objectives, technical solutions and advantages of examples of the present application clearer, the technical solutions in the examples of the present application will be clearly and completely described below in conjunction with the drawings in the examples of the present application, and apparently, the described examples are some but not all of the examples of the present application. All other examples obtained by those of ordinary skill in the art on the basis of the examples in the present application without creative efforts shall fall within the scope of protection of the present application.

A rust removal robot belongs to a type of high-altitude working robots, and a structure of the rust removal robot at least includes:

a robot main body;
a magnetic adsorption apparatus arranged on the robot main body, where a magnet 4 in the magnetic adsorption apparatus is configured to adsorb a working surface;
a rust removal apparatus arranged on the robot main body, and configured to perform rust removal working on an object;

a driving wheel group arranged on the robot main body, including a driving motor, and configured to drive the rust removal robot to walk;
a high-pressure water pipe 21 and a tension sensor 20, where the high-pressure water pipe 21 is connected to a robot body through the tension sensor 20, and the tension sensor 20 is configured to detect a tension value on the high-pressure water pipe 21;
a force-magnetic coupling module arranged on the robot body, and configured to monitor a magnetic adsorption force of the magnet 4 in the magnetic adsorption apparatus and control the magnet 4 in the magnetic adsorption apparatus to carry out linear movement;
a detection apparatus 32, an image recognition system 34 and an active-rotation integrated system 33 which are arranged on the robot body, where the detection apparatus 32 and the image recognition system 34 are configured to detect a roughness condition of a rust removal surface in real time;
a control unit configured to control the rust removal robot to work, send a falling prevention prompt signal according to the tension value on the high-pressure water pipe 21, and control the active-rotation integrated system according to the roughness condition; and
a magnet swinging apparatus arranged on the robot main body; the high-altitude working robot is based on a lightweight design, therefore, a sector magnet is adopted for the magnetic adsorption apparatus, and a magnet 4 of an existing magnetic adsorption robot in a company is fixed to a bottom of the robot, which can only move together with the robot, but cannot realize autonomous swinging, so that the robot cannot cross a position 1, a position 2, a position 3 and similar positions in FIG. 1; and in order to solve these problems, the magnet swinging apparatus is designed on the basis of the driving motor of the existing driving wheel group, and the magnet 4 of the rust removal robot, and the magnet swinging apparatus is arranged on the robot body.

FIG. 2 is a schematic diagram of a composition structure of the magnet swinging apparatus. The magnet swinging apparatus includes the magnet 4 in the magnetic adsorption apparatus, at least one gear such as a gear 13 and a gear 15, and a magnet fixing seat 17. The gear 13 is engaged with the gear 15, the magnet 4 is fixed to the gear 15 through the magnet fixing seat, and the gear 15 is driven to swing together with the magnet 4 through rotation of the gear 13.

Further, the magnet swinging apparatus includes the magnet 4 in the magnetic adsorption apparatus, at least one gear, a stop block 11, an electromagnetic clutch 12, a rotary shaft 14, a magnet fixing seat 16, the driving motor 7 of the driving wheel group, a speed reducer 6, and at least one rubber-coated wheel 5;

a gear 8 is fixed to the rubber-coated wheel 5 and rotates simultaneously with the rubber-coated wheel 5, and direction change is realized by adding a gear 9 in a transmission mechanism, so that a swinging direction of the magnet 4 is consistent with a movement direction of the robot; and

a gear 10 and the gear 13 are coaxial, the gear 10 is fixed to the rotary shaft 14, and free rotation of the gear 13 is realized by adding a bearing between the gear 13 and the rotary shaft.

Connection-disconnection of power transmission is realized by arranging the electromagnetic clutch 12 between the gear 10 and the gear 13, so that active rotation or free rotation of the gear 13 is controlled;

the gear 13 is engaged with the gear 15, the magnet 4 is fixed to the gear 15 through the magnet fixing seat 16, and the gear 15 is driven to swing together with the magnet 4 through rotation of the gear 13; and

a torque value required for swinging the magnet is calculated according to the value of the magnetic adsorption force of the magnet 4, and a transmission ratio, a center distance, and corresponding gear parameters of the transmission mechanism are calculated according to the torque value.

When the robot moves on a plane, the magnet 4 always faces a surface with a large adsorption force (i.e. the direction of the magnetic force is perpendicular to the movement direction of the robot); when the robot crosses an angle 1 in FIG. 1, the magnet 4 may realize crossing through freely swinging; however, when the robot crosses an angle 2, the magnet 4 needs to actively swing to change the direction of the magnetic force. The swinging direction of the magnet 4 is the same as the movement direction of the robot.

A new magnet swinging motor is not added, therefore, in the present invention, the driving motor of the existing robot is utilized for realizing active swinging of the magnet 4. Before a design, the torque value required for swinging the magnet needs to be calculated according to the value of the magnetic adsorption force of the magnet 4, and the transmission ratio, the proper center distance, and the corresponding gear parameters of the whole transmission mechanism are calculated according to the torque value.

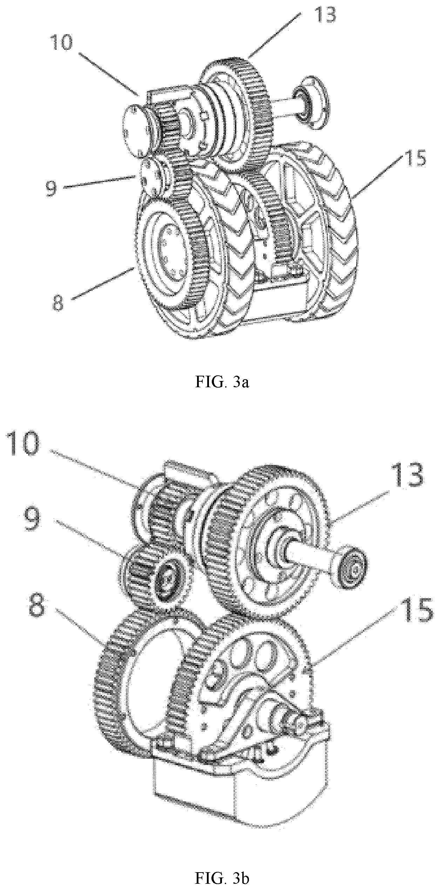

FIG. 3a and FIG. 3b are schematic diagrams of a composition structure of the transmission mechanism. The transmission mechanism is divided into two parts, the gear 8, the gear 9, and the gear 10 are the first part, with tooth numbers which are z1, z2, and z3 respectively; the gear 13 and the gear 15 are the second part, with tooth numbers which are z4 and z5 respectively. The gear 9 is an idler gear, and only plays a role of direction change, without changing the transmission ratio; and the gear 13 and the gear 15 have the same modulus.

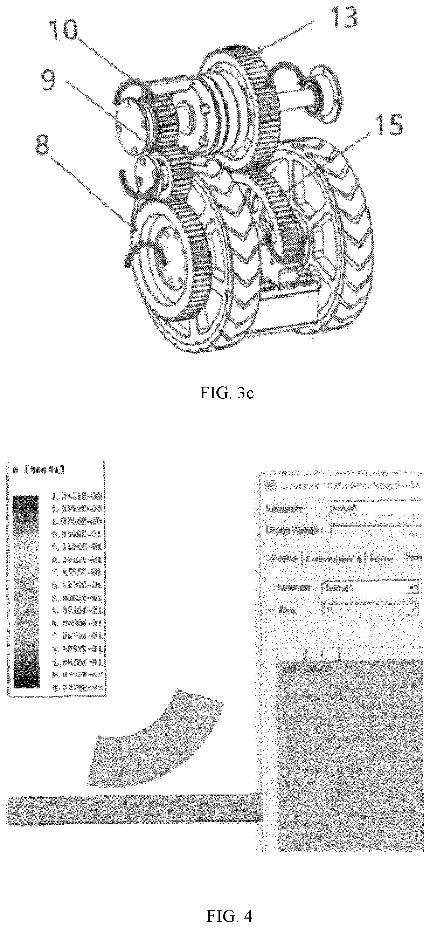

FIG. 4 is a schematic diagram of software simulation for the torque required for magnetic swinging. With regard to the calculation for the gear parameters, after the shape and size of the magnet 4 are determined, the torque value required for magnetic swinging can be obtained through ANSYS MAXWELL software simulation, the maximum torque required in the swinging process of the magnet 4 is calculated through simulation, the maximum torque required for swinging the magnet 4 which is obtained through a simulation result is $T_m$, and in order to ensure high reliability during a design for a gear transmission system, a higher value is taken for a safety factor s1.

The calculating the torque value required for swinging the magnet according to the value of the magnetic adsorption force of the magnet 4 includes:

calculating a transmitted torque of the gear 13 according to the torque required for swinging the magnet, where the torque required for swinging the magnet is s*$T_m$, and the transmitted torque $T_2$ of the gear 13 is calculated through the following formula:

$$T_2 = \frac{s_1 * T_m}{i_2}$$

where si is the safety factor, $i_2$ is a transmission ratio between the gear 13 and the gear 15, and $T_m$ is the maximum torque required for swinging the magnet 4; the transmitted torque of the gear 10 is the same as that of the gear 13, and the transmitted torque of the gear 10 is calculated in the same manner as that of the gear 13; and

a transmitted torque T1 of the gear 8 is calculated through the following formula:

$$T_1 = \frac{T_2}{i_1} = \frac{s_1 * T_m}{i_1 i_2}$$

where $i_1$ is a transmission ratio between the gear 8 and the gear 10; and

the torque value required for swinging the magnet 4 is calculated in the above manner, and a torque output by the driving motor 7 and a planetary reducer is much greater than T1, therefore, the magnet 4 may be driven to swing by adopting the driving motor 7.

As shown in FIG. 2, the magnet swinging apparatus includes the magnet 4, a gear 8, a gear 9, a gear 10, a gear 13, a gear 15, a stop block 11, an electromagnetic clutch 12, a rotary shaft 14, a magnet fixing seat 16, a driving motor 7, a speed reducer 6, a rubber-coated wheel 5, and a rubber-coated wheel 17. The gear 8 is fixed to the rubber-coated wheel 5 and rotates simultaneously with the rubber-coated wheel 5, and direction change is realized by adding the gear 9 in the transmission mechanism, so that the swinging direction of the magnet 4 is consistent with the movement direction of the robot. The gear 9 is an intermediate idler gear. The gear 10 and the gear 13 are coaxial, the gear 10 is fixed to the rotary shaft, and free rotation of the gear 13 is realized by adding a bearing between the gear 13 and the rotary shaft.

Connection-disconnection of power transmission is realized by arranging the electromagnetic clutch 12 between the gear 10 and the gear 13, so that active rotation or free rotation of the gear 13 is controlled.

The center distances a of the gears are calculated in the following manner:

the center distances a are estimated through the following relational expression according to contact strength of tooth surfaces of the gears;

$$a \geq A_a(u \pm 1)\sqrt[3]{\frac{KT_1}{\psi_a u \sigma_{HP}^2}}$$

where u is a gear ratio and meets u=i; $A_a$ is a value of a gear pair of paired steel gears, K is a load coefficient, $\psi_a$ is a tooth width coefficient, and $\sigma_{HP}$ is allowable contact stress.

In the above relational expression, the values of $A_a$, K and $\psi_a$ are evaluated through table lookup, the value of $\sigma_{HP}$ is evaluated through table lookup and according to the materials of the gears, and after the materials of the gears are determined, the value of $\sigma_{HP}$ is determined, and the center distances a may be determined.

The gear parameters include a modulus m, a tooth number z, a helical angle $\beta$, and a tooth width b, and calculation manners for these parameters are as follows.

(1) Modulus m

The modulus m is determined according to a working condition, and the modulus m (soft-tooth-surface transmission) is determined through $m_n$=(0.007 to 0.02) a; for a steady load, m=(0.007 to 0.01)a; for a moderate impact, m=(0.01 to 0.015)a; for a larger impact, m=(0.015 to 0.02)a.

In the above solution, the steady load, the moderate impact, and the larger impact are related to an actual working condition, the actual working condition is caused by external factors and depends on use coefficients during the type selection in the design, such as working characteristics of a prime mover and a working machine, and the values may be determined through consulting relevant information.

$m_n$ is a normal modulus, when the gear is a straight gear, the modulus is equal to the normal modulus, that is, $m_n$=m; when the gear is a bevel gear, the modulus includes an end surface modulus, a normal modulus and the like, where $m_n$=$m_t$cos$\beta$, and $m_t$ is the end surface modulus.

(2) Helical angle $\beta$

The helical angle $\beta$ of an involute spur cylindrical gear is equal to 0.

In the above calculation, the value of $\beta$ is 0 for facilitating the calculation, the actual helical angle $\beta$ can be obtained through calculation, and the gears in the technical solutions of the present invention are all externally engaged;

according to

$$z_1 = \frac{2a\cos\beta}{m_n(u \pm 1)} \cdot \qquad \beta = \arccos\beta\frac{m_n(u+1)z_1}{2a} \quad ;$$

a longitudinal overlap ratio may be increased by increasing the angle $\beta$ to ensure steady transmission, and a general value range of $\beta$ of the bevel gear is 8 degrees to 20 degrees.

(3) Tooth number z

The tooth number zi of the gear 8 is calculated according to the following formula:

$$z_1 = \frac{2a\cos\beta}{m_n(u \pm 1)} \, .$$

if the transmission of the gear is external engagement, u+1 is taken within the denominator bracket; if the transmission of the gear is internal engagement, u-1 is taken within the denominator bracket; the tooth number $z_3$ of the gear 10 is calculated through the following formula and according to the tooth number $z_1$ of the gear 8:

$$z_3 = u_1 {}^* z_1;$$

where u1 is the gear ratio of the gear 8; the value of the tooth number $z_2$ of the gear 9 is the same as that of the tooth number of the gear 10.

(4) Tooth width b

The tooth width b is calculated through the following formula:

$$b = \psi_a {}^* a$$

where $\psi_a$ is a tooth width coefficient.

After the calculation for the gear parameters is completed, a check on contact strength of tooth surfaces and a check on bending strength of gear teeth are carried out.

The check on contact strength of tooth surfaces is carried out according to the following formula:

$$S_H = \frac{\sigma_{H\lim} Z_{NT} Z_L Z_V Z_R Z_W Z_X}{\sigma_H} \; ;$$

where $\sigma_{Hlim}$ is a contact fatigue limit of the gear, $Z_{NT}$ is a life coefficient, $Z_L$ is a lubricant coefficient, Zv is a speed coefficient, $Z_R$ is a roughness coefficient, Zw is a working hardening coefficient, Zx is a size coefficient, and $\sigma_H$ is contact stress of the gear.

The check on bending strength of gear teeth is carried out according to the following formula:

$$S_F = \frac{\sigma_{F\lim} Y_{ST} Y_{NT}}{\sigma_{F0}} \times \frac{Y_{\delta relT} Y_{RrelT} Y_X}{K_A K_V K_{F\beta} K_{F\varepsilon}} \; ,$$

where $\alpha_{Flim}$ is a tooth root bending fatigue limit of the gear, $Y_{ST}$ is a stress correction coefficient of the gear, $Y_{NT}$ is a life coefficient, $Y_{\delta relT}$ is a tooth root fillet sensitivity coefficient, $Y_{RrelT}$ is a tooth root surface condition coefficient, Yx is a contact fatigue limit of the gear, $K_A$ is a use coefficient, Kv is a dynamic load coefficient, $K_{F\beta}$ is a tooth-direction load distribution coefficient, and $K_{F\varepsilon}$ is an inter-tooth load distribution coefficient.

The values of the parameters in the above formula for the check on contact strength of tooth surfaces and the formula for the check on bending strength of gear teeth are evaluated through table lookup, and the checks are carried out until the bending strength of the gear teeth meets the condition.

According to the above calculations, the gear parameters of the first part in the transmission mechanism can be determined, and the gear parameters of the gear 13 and the gear 15 of the second part are also calculated according to the above process. FIG. 3c is a schematic diagram of transmission directions of gears in the transmission mechanism, the swinging direction of the magnet 4 needs to be consistent with the movement direction of the robot, if the transmission system only includes the two parts, that is, the gear 8 and the gear 9, as well as the gear 13 and the gear 15, the swinging direction of the magnet 4 is opposite to the movement direction of the robot, therefore, direction change is carried out by adding the gear 9 (idler gear) between the gear 8 and the gear 10, so that the purpose that the swinging direction of the magnet 4 is consistent with the movement direction of the robot is achieved, and as shown in FIG. 3c, the gear 1 is fixed to the rubber-coated wheel, with the direction consistent with the movement direction of the robot.

Type selection for the electromagnetic clutch 12 needs to be determined according to the transmitted torque, the transmission system at the side of the gear 8, the gear 9, and the gear 10 is in a movement state along with the movement of the robot; when the robot moves on a plane or a curved surface with a small curvature, the electromagnetic clutch 12 is in a power-off and disengaged state, and the power cannot be transmitted to the side of the gear 13 and the gear 15; therefore, the magnet 4 is in a free swinging state. When the robot crosses an internal angle which is smaller than a certain angle, the electromagnetic clutch 12 is powered on and engaged, the gear 10 drives the gear 13 to rotate through the clutch, and transmits the power to the side of the gear 13 and the gear 15, and the magnet 4 is driven to swing.

The transmitted torque of the gear 10 is

$$T_2 = \frac{s_1 * T_m}{i_2}$$

, during the type selection for the electromagnetic clutch 12, in consideration of a safety coefficient $S_2$, the maximum torque of the electromagnetic clutch 12 is greater than $S_2 * T_2$, and a jaw-type electromagnetic clutch with a high torque-to-weight ratio is selected.

The gear 13 is engaged with the gear 15, the magnet 4 is fixed to the gear (5) through the magnet fixing seat, and the gear 15 is driven to swing together with the magnet 4 through rotation of the gear 13.

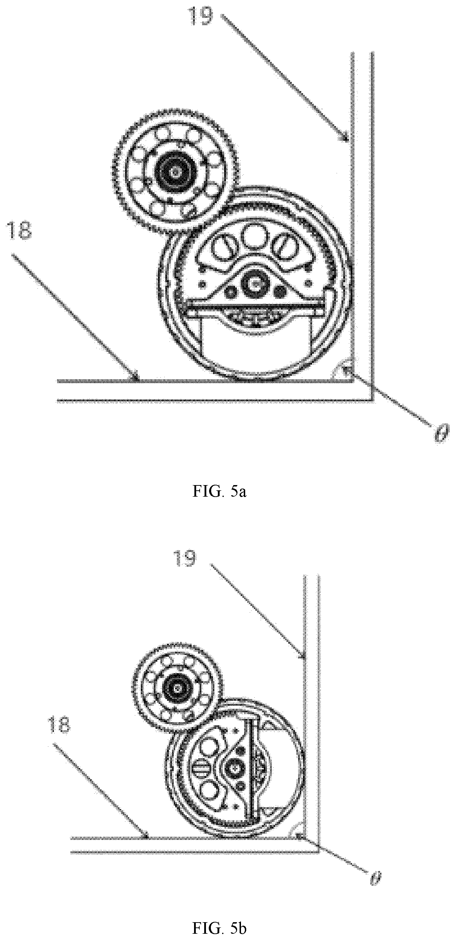

FIG. 5a is a schematic diagram of a state of the magnet 4 before swinging, and FIG. 5b is a schematic diagram of software simulation for a torque required for magnetic swinging. During the swinging, a forward-backward swinging angle of the magnet 4 is not less than 90 degrees, and the tooth number of the gear 15 is calculated according to the forward-backward swinging angle of the magnet 4.

The gear 15 is a swinging gear, the tooth number of the gear 15 is already obtained according to the above calculation, a tooth number of a sector part needing to be retained is determined according to a value of an internal angle that the robot needs to cross, where the internal angle is θ, and an angle of the swinging gear is α.

In order to ensure that the sector gear 15 is always engaged with the gear 13 during swinging, it can be determined according to FIG. 5a and FIG. 5b that:

the angle of the swinging gear meets $\alpha > (180° - \theta)$; and
the tooth number of the sector part needing to be retained of the swinging gear 15 of the magnet 4 is determined according to the angle α of the swinging gear.

In another implementation solution, the swinging for the magnet 4 may be realized through a solution of adding a magnet swinging motor, so that the whole existing transmission mechanism is removed. In the implementation solution, the wheel group module includes two motor: the walking motor and the magnet swinging motor.

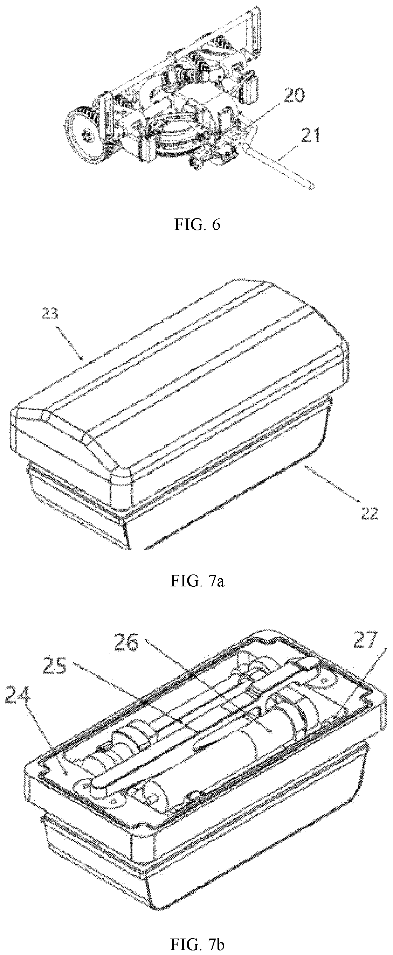

As an alternative example, as shown in FIG. 6, the rust removal robot further includes a high-pressure water pipe 21, a recovery pipe, and a tension sensor 20. The high-pressure water pipe 21 and the recovery pipe are bound together and connected to the robot body through the tension sensor 20. In order to improve the anti-falling mode of the existing rust removal robot, the tension sensor 20 detects a tension value on the high-pressure water pipe 21, the control unit receives the tension value on the high-pressure water pipe 21, and if the tension value on the high-pressure water pipe 21 is greater than a threshold value of tension, the control unit controls the rust removal robot to stop movement and sends the falling prevention prompt signal to a remote controller.

When the high-pressure water pipe 21 is pulled by an external force (such as being stuck by a docking block), falling is easily caused in the case that an operator is unaware, in a rust removal working process, a falling phenomenon caused by pulling of the high-pressure water pipe 21 and the recovery pipe on the robot due to the factor of the external force can only be prevented by the aid of the own adsorption force of the robot, and cannot be actively avoided. According to the present invention, the tension sensor 20 is added between the high-pressure water pipe 21 and the robot body, and the operator is timely reminded to check clamping of the high-pressure water pipe 21, and other phenomena according to a monitoring manner in the control unit, so that falling is avoided.

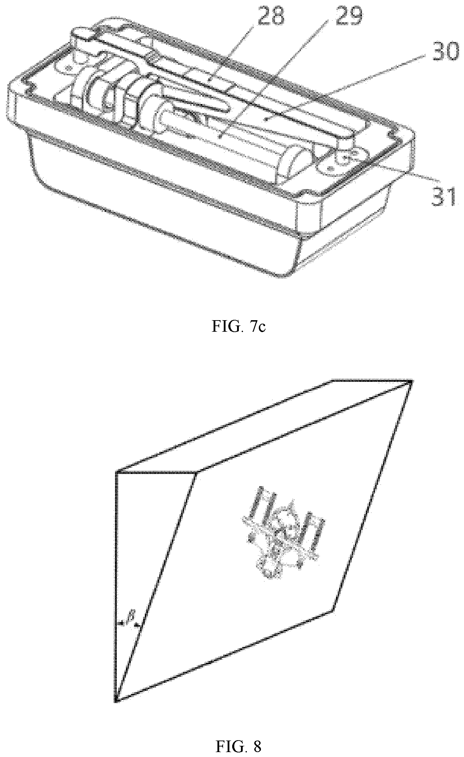

As an alternative example, as shown in FIG. 7a to FIG. 7c, the rust removal robot further includes a force-magnetic coupling module 23 which is arranged on the robot body, includes an execution module 23, and is configured to monitor a magnetic adsorption force of the magnet 4 in the magnetic adsorption apparatus and control the magnet 4 to carry out linear movement; preferably, the magnet 4 in the magnetic adsorption apparatus is a permanent magnet 22, the permanent magnet 22 is filled with glue inside, the execution module is equipped with a sealing strip, so that a certain degree of dust and water prevention may be realized as a whole, that is, the rust removal robot may be applied into a complex environment.

The execution module includes a motor 26, a linear fast lead screw 25, a guide rail 27, a strain gauge 28, a transmission bearing 29, a transmission structure member 30, a polished shaft 31, and a shell body 24; and all the components are installed inside the shell body. In a working process, the linear movement of the permanent magnet 22 is guided through the polished shaft, the shell body is connected with the polished shaft through a plastic linear bearing, and preferably, the shell body is equipped with a sealing ring outside, so that protection is realized. Preferably, two polished shafts 31 are arranged, and tail ends of the two polished shafts are installed on the transmission structure member, on the one hand, synchronization of the two polished shafts is maintained, and stress is uniformly distributed onto the transmission structure member, and on the other hand, due to the addition for the transmission structure member, physical limit during the movement is realized. Preferably, an induced deformation area is formed on the transmission structure member, and the strain gauge is arranged in the induced deformation area. The motor 26, the guide rail 27, the linear fast lead screw 25, and the transmission bearing in the execution module are installed in the shell body of the execution module; the motor and the linear fast lead screw in the execution module are connected through a synchronous belt, that is, linear movement is realized as a whole, and the transmission bearing is always in contact with an inclined surface of the transmission structure member.

During normal working, the permanent magnet 22 generates a magnetic adsorption force on the working surface, a relative movement trend is generated towards the working surface, the transmission bearing in the shell body of the execution module makes contact with the transmission structure member, so that the movement trend of the permanent magnet 22 is prevented, that is, the transmission structure member is deformed, the strain gauge in the induced deformation area detects a deformation quantity, converts the deformation quantity into an electrical signal, and outputs the electrical signal to the control unit of the rust removal robot, and the control unit calculates a value of the magnetic adsorption force during the normal working. When a distance between the permanent magnet 22 and the working surface is increased, and the value of the magnetic adsorption force is reduced, the control unit controls the motor in the execution module to rotate, a relative position of the transmission bearing and the transmission structure member is adjusted, and movement of the permanent magnet 22 towards the working surface is realized; and when the value of the magnetic adsorption force reaches a threshold value of the magnetic adsorption force, the control unit controls the motor in the execution module to stop movement and maintain at a current position. Further, when the magnetic adsorption force is increased, the control unit controls the motor in the execution module to execute opposite action.

In the working process, the rust removal robot may encounter bulged foreign objects and welding seams on the working surface, and a sudden large change of the curvature of the working surface, so that the distance between the permanent magnet of the robot and the working surface is increased, then the magnetic adsorption force is suddenly reduced; in this case, falling of the robot due to the insufficient magnetic adsorption force is caused, so that a potential safety hazard is formed. The handling of recognition and falling prevention in the emergency situation has not yet been carried out in the related art, the force-magnetic coupling module provided by the present invention is cooperated with the control unit, by monitoring the value of the magnetic adsorption force in real time, the distance between the permanent magnet and the working surface is actively adjusted, that is, the value of the magnetic adsorption force is adjusted, so that no great change of the magnetic adsorption force in the case that the robot encounters the bulged foreign objects, and the like is ensured, and stable adsorption for the robot onto the working surface may be ensured, so that the occurrence of falling is avoided.

As an alternative example, the rust removal robot further includes an inertial measurement unit, where the inertial measurement unit is installed on the robot body, and configured to obtain accelerations, angular speeds, and inclination angles of the robot in real time. According to a pose model of the rust removal robot shown in FIG. 8, the inertial measurement unit (IMU) may obtain accelerations, angular speeds, and angles of the rust removal robot in the three directions of the X axis, the Y axis, and the Z axis in real time. The X-axis refers to that the robot body points to the right side of the robot; the Y-axis refers to that the robot body points to the forward movement direction of the robot; and the Z-axis refers to an upward direction perpendicular to the working surface where the robot is located.

The inertial measurement unit sends a real-time acceleration A(Ax, Ay, Az) to the control unit, where Ax represents the acceleration of the rust removal robot in the X-axis direction, Ay represents the acceleration of the rust removal robot in the Y-axis direction, and Az represents the acceleration of the rust removal robot in the Z-axis direction. When the control unit determines that A is greater than Amax and A is close to the gravitational acceleration G (taken as $9.8m/s^2$), Amax is the maximum threshold value of the acceleration of the rust removal robot in a normal working state, it is determined that the rust removal robot is in a falling state, the control unit sends a falling protection signal, and an entire system receives the falling protection signal and automatically shuts down a high-pressure water machine, so that the working safety is ensured.

A great loss is easily caused after the falling of the rust removal robot, the rust removal robot is in the high-altitude working condition, so that in the case of a falling phenomenon, the orientation of the rust removal robot cannot be determined; according to the present invention, the falling state is comprehensively judged by simultaneously detecting the acceleration data in the three directions, and the falling state is protected, so that the working safety after the falling is ensured.

As an alternative example, the rust removal robot further includes a detection apparatus 32, an image recognition system 34 and an active-rotation integrated system 33 which are arranged on the robot body, preferably, the detection apparatus is a roughness measurement instrument, the image recognition system 34 is a high-definition automatic imaging device, and the active-rotation integrated system is an active rotation body with a rotation speed capable of being randomly adjusted within a preset range. The detection apparatus 32 is configured to detect a roughness value of the rust removal surface in real time, the control unit receives the roughness value, and if the roughness value is greater than a threshold value of roughness, the control unit controls the active-rotation integrated system to increase the rotation speed until the roughness value of the rust removal surface reaches the threshold value of roughness. Further, the control unit transmits the roughness value to a receiver of a remote controller of a control cabinet through a communication cable, and then the roughness value is displayed in a control panel of the remote controller. Further, if the detection apparatus sends a detection fault, the image recognition system 34 is started to obtain an image of the rust removal surface, the control unit receives the image of the rust removal surface and recognizes rust removal quality of the rust removal surface, and if the rust removal quality does not meet a preset quality condition, the control unit controls the active-rotation integrated system to increase the rotation speed until the rust removal quality of the rust removal surface reaches the preset quality condition. Further, the control unit transmits the image of the rust removal surface to the receiver of the remote controller of the control cabinet through the communication cable, and then the high-definition image of the rust removal surface is displayed in the control panel of the remote controller.

The existing rust removal robot can only complete rust removal working in one direction, monitoring for rust removal quality and appropriate adjustment for the rust removal quality are not facilitated in a rust removal process, a rust removal effect can only be adjusted in a manner of manual visual inspection, and detection and feedback adjustment mechanisms for rust removal quality are lacked, so that a poor rust removal effect is caused, and the visual inspection manner is low in error, large in observation distance, low in efficiency, and greatly affected by human interference factors. According to the present invention, an automatic recognition and adjustment manner for the rust removal quality based on the detection apparatus is provided, so that the adjustment convenience and accuracy for the rust removal quality are improved. In the case of a detection fault in the roughness instrument due to a certain reason (such as an uneven surface subjected to rust removal), the rust removal quality is observed through the image recognition system 34, so that the universality of the adjustment manner for the rust removal quality is improved. The preferred implementation manners of the present invention are described in detail above, however, the present invention is not limited to the specific details in the above implementation manners, and various simple variations may be made to the technical solutions of the present invention within the scope of the technical concept of the present invention, and these simple variations all fall within the scope of protection of the present invention.

In addition, it needs to be noted that, various specific technical features described in the above specific implementation manners may be combined in any suitable manner without contradiction, and in order to avoid unnecessary repetition, various possible combination manners are not described separately in the present invention. In addition, the various different implementation manners of the present invention may also be randomly combined, and should also be regarded as the content disclosed by the present invention as long as it does not depart from the idea of the present invention.

**Claims**

1. A reversible rust removal robot, **characterized in that** the rust removal robot comprises a robot main body;

   a magnetic adsorption apparatus arranged on the robot main body, wherein a magnet in the magnetic adsorption apparatus is configured to adsorb a working surface;
   a rust removal apparatus arranged on the robot main body, and configured to perform rust removal working on an object;
   a driving wheel group arranged on the robot main body, comprising a driving motor, and configured to drive the rust removal robot to walk;
   a high-pressure water pipe and a tension sensor, wherein the high-pressure water pipe is connected to a robot body through the tension sensor, and the tension sensor is configured to detect a tension value on the high-pressure water pipe;
   a force-magnetic coupling module arranged on the robot body, and configured to monitor a magnetic adsorption force of the magnet in the magnetic adsorption apparatus and control the magnet in the magnetic adsorption apparatus to carry out linear movement;
   a detection apparatus, an image recognition system and an active-rotation integrated system which are arranged on the robot body, wherein the detection apparatus and the image recognition system are configured to detect a roughness condition of a rust removal surface in real time;
   a control unit configured to control the rust removal robot to work, send a falling prevention prompt signal according to the tension value on the high-pressure water pipe, and control the active-rotation integrated system according to the roughness condition; and
   a magnet swinging apparatus arranged on the robot main body;
   wherein the magnet swinging apparatus comprises the magnet (4) in the magnetic adsorption apparatus, a gear (13), a gear (15), and a magnet fixing seat (16); and
   the gear (13) is engaged with the gear (15), the magnet is fixed to the gear (15) through the magnet fixing seat (16), and the gear (15) is driven to swing together with the magnet (4) through rotation of the gear (13).

2. The reversible rust removal robot according to claim 1, **characterized in that** the tension sensor detects the tension value on the high-pressure water pipe, the control unit of the rust removal robot receives the tension value on the high-pressure water pipe, and when the tension value on the high-pressure water pipe is greater than a threshold value of tension, the control unit controls the rust removal robot to stop movement and sends the falling prevention prompt signal to a remote controller.

3. The reversible rust removal robot according to claim 1, **characterized in that** the force-magnetic coupling module comprises an execution module, and the magnet in the magnetic adsorption apparatus is a permanent magnet;
   wherein the execution module comprises a motor, a linear fast lead screw, a guide rail, a strain gauge, a transmission bearing, a transmission structure member, a polished shaft, and a shell body; the linear movement of the permanent magnet is guided through the polished shaft, the shell body is connected with the polished shaft through a plastic linear bearing, a tail end of the polished shaft is installed on the transmission structure member, an induced deformation area is formed on the transmission structure member, the strain gauge is arranged in the induced deformation area, and the motor and the linear fast lead screw in the execution module are connected through a synchronous belt.

4. The reversible rust removal robot according to claim 3, **characterized in that**, during normal working, the permanent magnet generates a magnetic adsorption force on the working surface, a relative movement trend is generated towards the working surface, the transmission bearing in the shell body of the execution module makes contact with the transmission structure member, the transmission structure member is deformed, the strain gauge in the induced deformation area detects a deformation quantity, converts the deformation quantity into an electrical signal, and outputs the electrical signal to the control unit of the rust removal robot, and the control unit calculates a value of the magnetic adsorption force during the normal working;

   when a distance between the permanent magnet and the working surface is increased, and the value of the magnetic adsorption force is reduced, the control unit controls the motor in the execution module to rotate, a relative position of the transmission bearing and the transmission structure member is adjusted, and the permanent magnet is controlled to move towards the working surface; and

when the value of the magnetic adsorption force reaches a threshold value of the magnetic adsorption force, the control unit controls the motor in the execution module to stop movement and maintain at a current position.

5. The reversible rust removal robot according to claim 1, **characterized in that** the rust removal robot further comprises an inertial measurement unit, wherein the inertial measurement unit is installed on the robot body, and configured to obtain accelerations, angular speeds, and inclination angles of the robot in three directions of a X axis, a Y axis, and a Z axis in real time;

the inertial measurement unit sends a real-time acceleration A(Ax, Ay, Az) to the control unit, wherein Ax represents the acceleration of the rust removal robot in the X-axis direction, Ay represents the acceleration of the rust removal robot in the Y-axis direction, and Az represents the acceleration of the rust removal robot in the Z-axis direction; and

when it is determined that A is greater than Amax and A is close to a gravitational acceleration G, Amax is a maximum threshold value of the acceleration of the rust removal robot in a normal working state, the rust removal robot is determined to be in a falling state, the control unit sends a falling protection signal, and an entire system receives the falling protection signal and automatically shuts down a high-pressure water machine.

6. The reversible rust removal robot according to claim 1, **characterized in that** the detection apparatus is configured to detect a roughness value of the rust removal surface in real time, the control unit receives the roughness value, and when the roughness value is greater than a threshold value of roughness, the control unit controls the active-rotation integrated system to increase a rotation speed until the roughness value of the rust removal surface reaches the threshold value of roughness; and

when the detection apparatus sends a detection fault, the image recognition system is started to obtain an image of the rust removal surface, the control unit receives the image of the rust removal surface and recognizes rust removal quality of the rust removal surface, and when the rust removal quality does not meet a preset quality condition, the control unit controls the active-rotation integrated system to increase the rotation speed until the rust removal quality of the rust removal surface reaches the preset quality condition.

7. The reversible rust removal robot according to claim 1, **characterized in that** the magnet swinging apparatus further comprises a gear (8), a gear (9), a gear (10), a stop block (11), an electromagnetic clutch (12), a rotary shaft (14), the driving motor (7) in the driving wheel group, a speed reducer (6), a rubber-coated wheel (5), and a rubber-coated wheel (17);

the gear (8) is fixed to the rubber-coated wheel (5) and rotates simultaneously with the rubber-coated wheel, and direction change is realized by adding the gear (9) in a transmission mechanism, so that a swinging direction of the magnet is consistent with a movement direction of the robot;

the gear (10) and the gear (13) are coaxial, the gear (10) is fixed to the rotary shaft, and free rotation of the gear (13) is realized by adding a bearing between the gear (13) and the rotary shaft; and

connection-disconnection of power transmission is realized by arranging the electromagnetic clutch between the gear (10) and the gear (13), so that active rotation or free rotation of the gear (13) is controlled.

8. The reversible rust removal robot according to claim 1, **characterized in that** the transmission mechanism is divided into two parts, a gear (8), a gear (9), and a gear (10) are a first part, with tooth numbers which are z1, z2, and z3 respectively; the gear (13) and the gear (15) are a second part, with tooth numbers which are z4 and z5 respectively; wherein the gear (9) is an idler gear, and only plays a role of direction change, without changing a transmission ratio; and the gear (13) and the gear (15) have the same modulus.

9. The reversible rust removal robot according to claim 7, **characterized in that** the gear (9) is an intermediate idler gear.

10. The reversible rust removal robot according to claim 7, **characterized in that** the gear (15) is a sector gear.

11. The reversible rust removal robot according to claim 7, **characterized in that** a torque value required for swinging the magnet is calculated according to a value of the magnetic adsorption force of the magnet, and type selection for the electromagnetic clutch is determined according to the transmitted torque.

12. The reversible rust removal robot according to claim 7, **characterized in that**, during swinging, a forward-backward swinging angle of the magnet is not less than 90 degrees.

13. The reversible rust removal robot according to claim 12, **characterized in that** a tooth number of the gear (15) is calculated according to the forward-backward swinging angle of the magnet.

14. The reversible rust removal robot according to claim 13, **characterized in that** the calculating according to the forward-backward swinging angle of the magnet comprises:

determining a tooth number of a sector part needing to be retained according to the tooth number of the gear (15) and a value of an internal angle that the robot needs to cross, wherein the internal angle is θ, and an angle of the swinging gear is α;
the angle of the swinging gear meets $\alpha > 2(180° - \theta)$; and
the tooth number of the sector part needing to be retained of the swinging gear (15) of the magnet is determined according to the angle α of the swinging gear.

15. The reversible rust removal robot according to claim 11, **characterized in that** the determining type selection for the electromagnetic clutch according to the transmitted torque comprises: the transmitted

$$T_2 = \frac{s_1 * T_m}{i_2},$$

torque of the gear (10) is
during type selection for the electromagnetic clutch, the maximum torque of the electromagnetic clutch is greater than $s_2 * T_2$, and a jaw-type electromagnetic clutch with a high torque-to-weight ratio is selected.

16. The reversible rust removal robot according to claim 11, **characterized in that** the calculating the torque value required for swinging the magnet according to the value of the magnetic adsorption force of the magnet comprises:

calculating a transmitted torque of the gear (13) according to the torque required for swinging the magnet, wherein the torque required for swinging the magnet is $s * T_m$, and the transmitted torque T2 of the gear (13) is calculated through the following formula:

$$T_2 = \frac{s_1 * T_m}{i_2}$$

wherein si is a safety factor, $i_2$ is a transmission ratio between the gear (13) and the gear (15), and $T_m$ is the maximum torque required for swinging the magnet;
a transmitted torque of the gear (10) is the same as that of the gear (13), and the transmitted torque of the gear (10) is calculated in the same manner as that of the gear (13); and
a transmitted torque Ti of the gear (8) is calculated through the following formula:

$$T_1 = \frac{T_2}{i_1} = \frac{s_1 * T_m}{i_1 i_2};$$

wherein ii is a transmission ratio between the gear (8) and the gear (10).

FIG. 1

FIG. 2

FIG. 3a

FIG. 3b

FIG. 3c

FIG. 4

FIG. 5a

FIG. 5b

FIG. 6

FIG. 7a

FIG. 7b

FIG. 7c

FIG. 8

FIG. 9

## INTERNATIONAL SEARCH REPORT

| | International application No. |
|---|---|
| | **PCT/CN2022/093813** |

| A. | CLASSIFICATION OF SUBJECT MATTER |
|---|---|

B62D 57/024(2006.01)i;  B25J 11/00(2006.01)i;  B25J 13/08(2006.01)i

According to International Patent Classification (IPC) or to both national classification and IPC

| B. | FIELDS SEARCHED |
|---|---|

Minimum documentation searched (classification system followed by classification symbols)

B62D B25J

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 史河, 许华旸, 除锈, 机器人, 坠, 掉落, 高压, 水管, 齿轮, 磁体, 磁铁, 摆, 离合, 传感器, derust+, robot, fall, drop, high pressure, pipe, gear, magnet, waggle, clutch, sensor

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114435502 A (BEIJING SHIHE TECHNOLOGY CO., LTD.) 06 May 2022 (2022-05-06) claims 1-16 | 1-16 |
| PX | CN 114313048 A (BEIJING SHIHE TECHNOLOGY CO., LTD.) 12 April 2022 (2022-04-12) description, paragraphs [0054]-[0122], and figures 1-5b | 1, 2, 7-16 |
| Y | CN 107443392 A (ZHEJIANG UNIVERSITY et al.) 08 December 2017 (2017-12-08) description, paragraphs [0016]-[0021], and figures 1-3 | 1, 2, 7-13, 15, 16 |
| Y | CN 106347514 A (HARBIN LONGHIT ROBOT TECHNOLOGY CO., LTD.) 25 January 2017 (2017-01-25) description, paragraph [0008], and figures 1-3 | 1, 2, 7-13, 15, 16 |
| A | WO 2014087999 A1 (OSAKA CITY UNIVERSITY) 12 June 2014 (2014-06-12) entire document | 1-16 |
| A | CN 111531471 A (KUNSHAN WELD INTELLIGENT EQUIPMENT TECHNOLOGY CO., LTD.) 14 August 2020 (2020-08-14) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2022** | **28 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/093813**

| Patent document cited in search report | | | Publication date (day/month/year) | Patent family member(s) | | | Publication date (day/month/year) |
|---|---|---|---|---|---|---|---|
| CN | 114435502 | A | 06 May 2022 | None | | | |
| CN | 114313048 | A | 12 April 2022 | None | | | |
| CN | 107443392 | A | 08 December 2017 | CN | 206899250 | U | 19 January 2018 |
| CN | 106347514 | A | 25 January 2017 | CN | 106347514 | B | 30 October 2018 |
| WO | 2014087999 | A1 | 12 June 2014 | JP | 5846516 | B2 | 20 January 2016 |
| CN | 111531471 | A | 14 August 2020 | CN | 212351663 | U | 15 January 2021 |

Form PCT/ISA/210 (patent family annex) (January 2015)